# EUROPÄISCHE PATENTSCHRIFT

(11) **EP 2 183 517 B1**
(45) Veröffentlichungstag und Bekanntmachung des Hinweises auf die Patenterteilung: **12.10.2011**
(21) Anmeldenummer: 08785330.5
(22) Anmeldetag: 04.08.2008
(51) Int. Cl.: F16L 25/00, F16L 37/098

(54) **VERBINDUNGS- UND ANSCHLUSSSTÜCK FÜR EINEN WELLENSCHLAUCH**
CONNECTING AND ATTACHMENT COMPONENT FOR A CORRUGATED HOSE
PIECE DE RACCORDEMENT ET DE CONNEXION POUR UN FLEXIBLE ONDULE

(30) Priorität: 28.08.2007 DE 102007040745
(43) Veröffentlichungstag der Anmeldung: 12.05.2010
(73) Patentinhaber: Flexa GmbH & Co. Produktion und Vertrieb KG, 63456 Hanau (DE)
(72) Erfinder: FIEBER, Dieter, 63512 Hainburg (DE)
(74) Vertreter: Grimm, Ekkehard
(86) Internationale Anmeldenummer: PCT/EP2008/006401
(87) Internationale Veröffentlichungsnummer: WO 2009/030328

(56) Entgegenhaltungen:
- DE-C1- 4 020 171

## Beschreibung

Die Erfindung betrifft ein Verbindungs- und Anschlussstück für einen Wellenschlauch mit einem hülsenförmigen Grundkörper, der ein Wellenschlauch-Verbindungsende aufweiset, und mit einer dazu zugeordneten Innen- oder Außenhülse, wobei das Ende eines Wellenschlauchs in die Innenhülse, die in den Grundkörper eingesetzt ist, oder, in Verbindung mit einer Außenhülse, in den Grundkörper einsteckbar ist, und dessen anderes Ende als Verbindungselement ausgebildet ist, und wobei mindestens zwei federnde Arme an der Hülse vorgesehen sind, die jeweils an ihrem Basis-Ende an der Hülse fest gehalten sind und an ihrem anderen freien Ende mindestens einen radial verlaufenden Eingriffsvorsprung aufweisen, der über den Innenumfang der Hülse nach innen vorsteht und mit den Wellen eines Wellenschlauchs, diesen arretierend, in Eingriff bringbar ist, wobei das Basis-Ende in Bezug auf das freie Ende von dem Wellenschlauch-Verbindungsende abgewandt ist.

Solche Verbindungs- und Anschlussstücke werden dazu verwendet, das Ende eines Wellenschlauchs so auszugestalten, dass es mit einem Rohr oder einem Schlauch verbunden werden kann. Wellenschläuche dienen dazu, elektrische, pneumatische und sonstige Leitungen aufzunehmen und dadurch zu schützen; sie müssen aber gleichzeitig eine ausreichende Flexibilität aufweisen, damit sie beim Verlegen den Gegebenheiten angepasst werden können.

Verbindungs- und Anschlussstücke für Wellenschläuche müssen sich zum einen an dem Wellenschlauch festklemmen und dort einen sicheren Halt gewährleisten, zum anderen müssen sie ausreichend fest und stabil sein, um auch für harte Einsatzbedingungen geeignet zu sein.

Üblicherweise bestehen solche Anschluss- und Verbindungsstücke aus einem Grundkörper. Dieser Grundkörper weist an seinem einen Ende einen Anschlussflansch, beispielsweise in Form eines Zylinderabschnitts, auf, auf dessen Außenseite ein Verbindungsschlauch oder ein Rohr aufgesteckt und beispielsweise mittels einer Rohrschelle festgeklemmt wird. Das andere Ende weist einen weiteren, zylindrischen Abschnitt auf, in den hinein ein zu verbindender Wellenschlauch gesteckt wird. Darüber hinaus ist ein Ring vorgesehen, der zwischen der Außenseite des Wellenschlauchs und dem Innenumfang des Anschlussstücks zwischengefügt wird. Dieser Zwischenring oder dieses Zwischenteil besitzt nach innen vorspringende Eingriffnasen, die sich in den ringförmigen Vertiefungen des Wellenschlauchs verhaken. Weiterhin sind Maßnahmen vorgesehen, die dazu dienen, dass die Rastteile in den Wellentälern gehalten werden, auch dann, wenn Zugkräfte auf den Wellenschlauch ausgeübt werden. Typischerweise werden dann, je höher solche Zugkräfte werden, desto stärker die Rastteile in die Wellentäler gedrückt.

Ein Verbindungs- und Anschlussstück für einen Wellenschlauch der eingangs genannten Art, auch als Verbindungselement bezeichnet, ist aus der DE 40 20 171 C1 bekannt. Dieses Verbindungselement umfasst ein annähernd zylindrisches Gehäuse mit einem Anschlussstück sowie mehreren fensterartigen Öffnungen in der Gehäusewand und einen am Gehäuse anlegbaren Tragring mit einer stirnseitigen Ringfläche und mit Schenkeln und Verriegelungskrallen an deren freien Enden. Der Tragring weist die Form einer Schiebemuffe, bestehend aus einem Anschlagring, einem axial mit Abstand dazu angeordneten Innenring, den Anschlagring und den Innenring verbindenden Stege, sowie sich vom Innenring zum Anschlagring hin erstreckende Schenkel mit den Verriegelungskrallen an deren freien Enden, auf. Diese Verriegelungsteile weisen in der Draufsicht eine rechteckige Form auf. Aufgrund des Aufbaus dieses Verbindungselements mit einem als zylindrisches Gehäuse ausgeführten Grundkörper und einer Schiebemuffe, die eine Innenhülse bildet, kann dieses als zweiteilig bezeichnet werden.

Ein weiteres Verbindungs- und Anschlussstück der eingangs genannten Art ist beispielsweise aus der DE 197 14 661 A1 bekannt. Das darin gezeigte Kupplungselement für Wellenrohre umfasst ein Gehäuse, in welches das Ende eines Wellenrohrs einsteckbar ist, und einen am Gehäuse verschiebbar gelagerten Ring mit biegeelastischen Zungen. Die Zungen besitzen an ihrer radialen Innenseite vorspringende Eingriffsnasen für den Eingriff in eine Umfangsnut des Wellenrohrs. Die Form der Zungen ist rechteckig; die Eingriffsnasen der Zungen weisen zu der Einstecköffnung hin. Der Ring ist bei dieser Ausführungsform an der Außenseite des Gehäuses gelagert und seine Zungen erstrecken sich durch Öffnungen des Gehäuses hindurch zum Wellenrohr.

Ein ähnliches Anschlussstück ist aus der DE 195 40 280 C1 bekannt, wiederum zweiteilig mit einem hülsenförmigen Grundkörper und einem Ring, der allerdings innen in das Grundgehäuse, zwischen Wellenschlauch und der Innenseite des Grundgehäuses, eingesetzt wird. Auch dieser Zwischenring weist Rastnasen auf, die in die Wellentäler des Wellenschlauchs eingreifen. Die Rastnasen sind in einem bestimmten Umfang flexibel und sind radial nach außen mit Erhebungen versehen, die sich in Durchbrüche des Grundkörpers einlegen und dadurch den Zwischenring und damit den Wellenschlauch in dem Grundkörper verriegeln.

Ein weiterer Verbinder für Rohre aus Kunststoff ist aus der DE 690 04194 T2 bekannt. Dieser Verbinder ist einstückig aus einem Kunststoff gebildet und weist federnde Haken auf, die entsprechend in dem Grundkörper ausgestanzt sind. Diese Rastnasen biegen sich federnd nach außen, wenn ein Wellenschlauch in den Verbinder eingesteckt wird, und greifen dann federnd in entsprechende Wellentäler des Wellenschlauchs ein.

Ein weiterer, einteiliger Verbinder mit rechteckigen Eingriffsfingern ist aus der DE 98 90 614 C2 bekannt.

Die DE 39 03 353 A1 beschreibt eine Anschlussarmatur für umfangsgerippte Rohre oder Schläuche, insbesondere für flexible Wellschläuche, mit quer zur Schlauchachse am Umfang umlaufenden Wellen oder dergleichen, wobei die Anschlussarmatur eine das Ende des Wellschlauches in sich aufnehmende Hülse hat und in der Wandung dieser Hülse eine gegen eine Rückstellkraft eines Federbereiches auslenkbare, sich in axialer Richtung der Hülse erstreckende Zunge mit einem in das Hülseninnere gerichteten Vorsprung zum Eingriff in ein Wellental oder dergleichen des Wellschlauches oder Wellrohre für dessen axiale Feststellung vorgesehen ist. Diese einteilige Anschlussarmatur ist dadurch gekennzeichnet, dass nur eine einzige Zunge vorgesehen ist. Die Zunge kann verschiedene Formen aufweisen; in einer Ausführungsform ist sie trapezförmig ausgebildet, wobei die breite Kante den Eingriffsvorsprung aufweist und dieser Eingriffsvorsprung von dem offenen Ende der Hülse wegweist. In einer anderen Ausführungsform ist ein schmaler Basisabschnitt eines Armbereichs vorhanden, der sich zum freien Ende hin, das den Eingriffsvorsprung trägt, trapezförmig erweitert. In einer noch weiteren Ausführungsform ist die Zunge T-förmig ausgebildet. In allen Ausführungsformen ist das Ende der Zunge, an dem der Eingriffsvorsprung angebracht ist, von dem Ende des Anschlussteils abgewandt.

Die WO 01/14780 A1 beschreibt ein Verbindungs- und Anschlussstück für einen Wellenschlauch, das als Befestigungskupplung für Wellenrohre bezeichnet ist, welches einteilig ausgebildet ist und federnde Arme aufweist, die eine trapezförmige Form aufweisen und bei denen die Eingriffsvorsprünge an dem breiteren Ende angeordnet sind; die federnden Arme sind so orientiert, dass deren Eingriffsenden von dem Einsteckende des Wellenschlauchs abgewandt sind.

Tests haben gezeigt, dass die verschiedenen Verbindungs- und Anschlussstücke, wie sie vorstehend beschrieben sind, einen sehr unterschiedlichen Halt der daran angeordneten Wellenschläuche bzw. Wellenrohre bieten, insbesondere dann, wenn das Wellenrohr einer Walkbewegung unterworfen wird. Wenn die Wellenschläuche darüber hinaus auch aus einem weicheren Material gefertigt sind, ist kein sicherer Halt gewährleistet.

Ausgehend von dem vorstehend beschriebenen Stand der Technik liegt der Erfindung die Aufgabe zugrunde, ein hoch festes Verbindungs- und Anschlussstück für einen Wellenschlauch so auszugestalten, dass es einfach hergestellt werden kann und ein einfaches Anbringen an einem Wellenschlauch ermöglicht, und insbesondere sicherstellt, dass ein Wellenschlauch auch dann fest in dem Anschlussstück gehalten wird, wenn der Wellenschlauch neben hohen Zugkräften auch einer starken Bewegung, wie beispielsweise einer Walkbewegung, unterworfen wird.

Gelöst wird die Aufgabe durch ein Verbindungs- und Anschlussstück mit den eingangs genannten Merkmalen, das dadurch gekennzeichnet ist, dass mindestens zwei federnde Arme vorgesehen sind und so dimensioniert sind, dass sich deren Eingriffsvorsprünge über mindestens 50 % des Innenumfangs des Grundkörpers erstrecken, dass der jeweilige federnde Arm, in Umfangsrichtung des Grundkörpers gesehen, eine Breite Be seines freien Endes aufweist, die mindestens dem 1,5-fachen der Breite Bb seines Basis-Endes entspricht, und dass der jeweilige federnde Arm eine Länge Ln von dem Basis-Ende bis zu dem freien Ende aufweist, die größer als die Breite Bb seines Basis-Endes ist

Durch die Dimensionierung der Eingriffsvorsprünge so, dass sie sich zusammen über mindestens 50 % des Innenumfangs des Grundkörpers erstrecken, und durch die angegebene Dimensionierung des jeweiligen federnde Arms in Bezug auf die Umfangsrichtung des Grundkörpers wird einerseits eine gute Federung bei andererseits leicht möglicher Demontage, aber ansonsten hoher Haltekraft, erreicht. Durch die angegebene Dimensionierung der Länge Ln des jeweiligen federnden Arms, die größer als die Breite Bb seines Basis-Endes ist, wird eine optimale Federung des federnden Arms gerade bei auftretenden Walkbewegungen erzielt, so dass sich trotz solcher Walkbewegungen der Wellenschlauch nicht aus dem Verbindungs- und Anschlussstück löst.

Ein Verbindungs- und Anschlussstück mit den beanspruchten Merkmalen hat auch bei hohen Belastungen und Beanspruchungen zu besseren Ergebnissen im Vergleich zu Verbindungs- und Anschlussstücken, wie sie nach dem Stand der Technik bekannt sind und eingesetzt werden, geführt.

Bevorzugt wird die Länge Ln kleiner als die Breite Be des freien Endes ausgewählt. Dadurch wird eine gute Haltekraft erreicht.

Eine bevorzugte Bemessung des axialen Abstands Lh des freien Endes jedes federnden Arms von dem Wellenschlauch-Verbindungsende liegt bei mindestens dem 0,8-fachen der Breite Bb des Basis-Endes des federnden Arms. Dies führt dazu, dass ein gutes Verhalten unter Einwirkung äußerer Kräfte gegeben ist; ein sicheres Halten des Wellenschlauchs wird gewährleistet.

Um die Haltekräfte gleichmäßig über den Umfang des Wellenschlauchs zu verteilen, sollten mindestens drei federnde Arme oder auch vier federnde Arme vorgesehen werden, die darüber hinaus gleichmäßig um den Umfang des Verbindungs- und Anschlussstückes und damit um den Umfang des Wellenschlauchs verteilt sein sollten.

Die Summe der Eingriffsvorsprünge der federnden Arme sollte sich über mindestens 50 %, vorzugsweise über mindestens 60 %, des Innenumfangs des Grundkörpers erstrecken, um eine gute Haltekraft auch bei Beanspruchung durch eine Walkbewegung am Schlauch zu erreichen.

Die Breite Be des freien Endes des federnden Arms sollte mindestens dem 1,5-fachen der Breite Bb seines Basis-Endes entsprechen.

Für optimale Federcharakteristiken des federnden Arms sollte die Länge Ln des federnden Arms von dem Basis-Ende bis zu dem freien Ende um das mindestens 1,2-fache größer ist als die Breite Bb seines Basis-Endes (13) sein und das Verhältnis von Be zu Ln sollte mindestens 1,4 betragen.

Um einem Herauswalken des Schlauches aus dem Wellenschlauch-Verbindungsende des Verbindungs- und Anschlussstücks noch stärker entgegenzuwirken, sollte der axiale Abstand Lh des freien Endes jedes federnden Arms von dem Wellenschlauch-Verbindungsende mindestens dem 2-fachen des Abstands Lf des Basis-Endes des federnden Arms von dem Verbindungselement-Ende betragen.

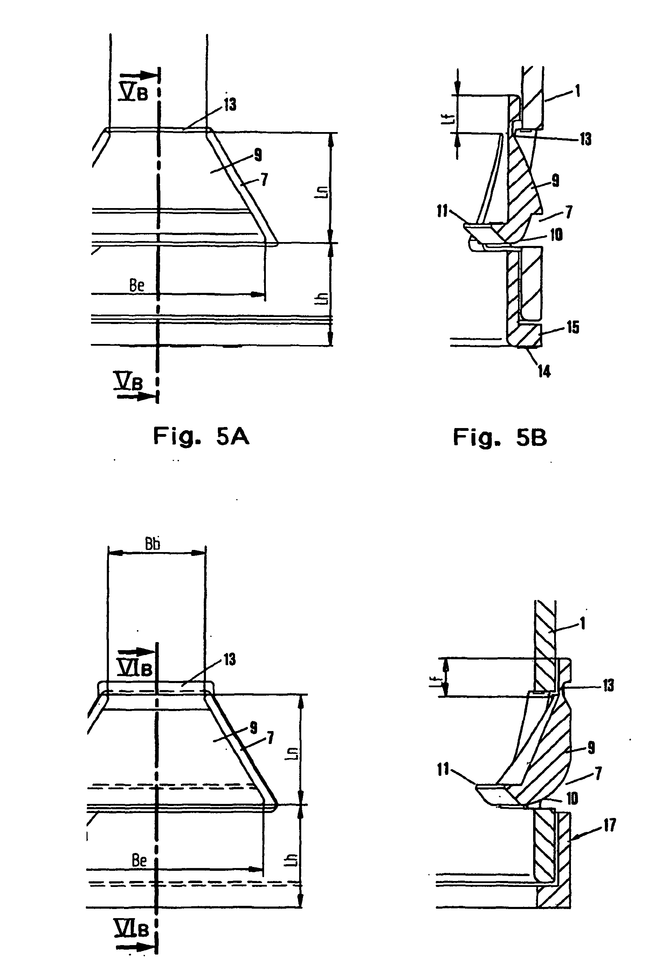

Soweit in der vorstehenden Beschreibung Dimensionierungsgrößen angegeben sind, so wird, zum besseren Verständnis und zur leichteren Zuordnung dieser Größen zu Teilen des Verbindungs- und Anschlussstücks, insbesondere auf die Figuren 5A und 5B verwiesen.

Weitere Einzelheiten und Merkmale der Erfindung ergeben sich aus der nachfolgenden Beschreibung eines Ausführungsbeispiels anhand der Zeichnung. In der Zeichnung zeigt
- Figur 1 A: eine perspektivische Ansicht eines Verbindungs- und Anschlussstücks mit hülsenförmigem Grundkörper und darin eingesetzter Innenhülse für einen Wellenschlauch mit Sicht auf das Wellenschlauch-Verbindungsende,
- Figur 1 B: eine Schnittansicht des Verbindungs- und Anschlussstücks der Figur 1A entlang der Schnittlinie IB-IB,
- Figur 2A: eine Draufsicht auf die Außenseite des Verbindungs- und Anschlussstücks der Figuren 1A und 1B,
- Figur 2B: eine Ansicht auf das Wellenschlauch-Verbindungsende des Verbindungs- und Anschlussstücks der Figur 2A aus Sicht des Sichtpfeils IIB in Figur 2A,

- Figur 3A: eine perspektivische Ansicht nur der Innenhülse, wie sie in dem Verbin- dungs- und Anschlussstück eingesetzt ist, das in Figur 1A dargestellt ist,
- Figur 3B: eine Schnittansicht entlang der Schnittlinie IIIB der Fig. 3A,
- Figur 4A: eine Außenansicht der Innenhülse der Figur 3A,
- Figur 4B: eine Ansicht auf das Ende der Innenhülse der Figur 4A aus Richtung des Sichtpfeils IVB in Figur 4A,
- Figur 5A: eine Detailansicht eines federnden Arms, um die geometrischen Verhältnisse zu verdeutlichen, bei einer Ausführung mit Innenhülse,
- Figur 5B: einen Schnitt entlang der Schnittlinie VB-VB in Figur 5A,
- Figur 6A: eine Detailansicht eines federnden Arms, um die geometrischen Verhältnisse zu verdeutlichen, bei einer Ausführung mit Außenhülse, und
- Figur 6B: einen Schnitt entlang der Schnittlinie VIB-VIB in Figur 6A.

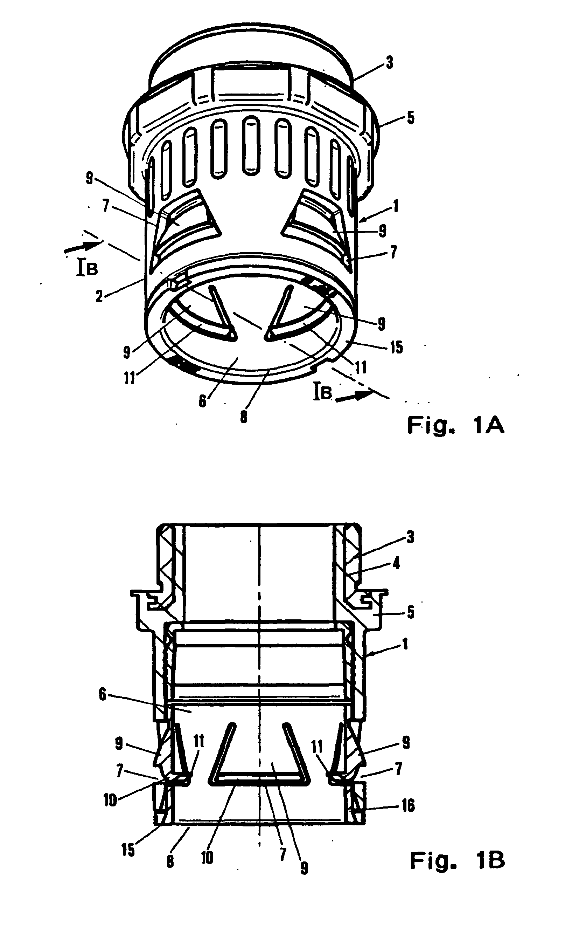

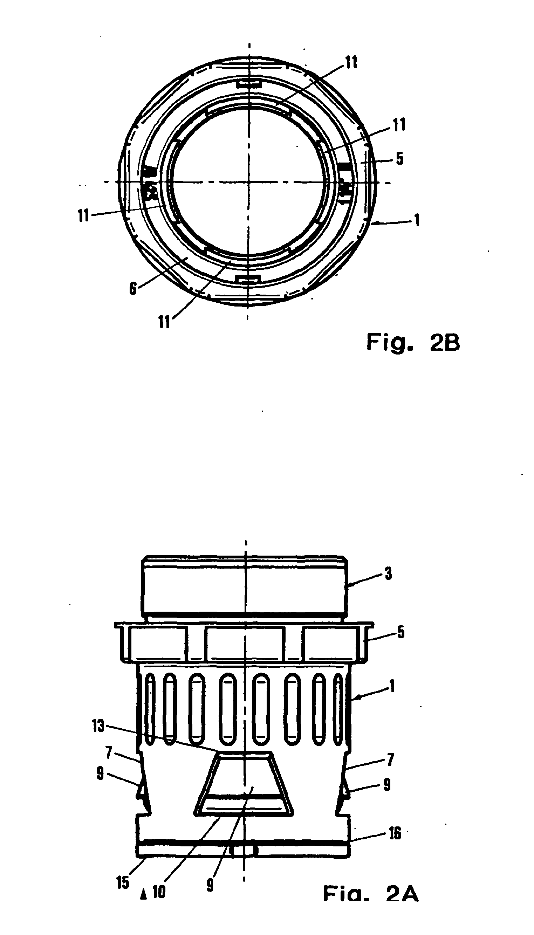

Das Verbindungs- und Anschlussstück, wie es in den Figuren gezeigt ist, und insbesondere unter Bezugnahme zunächst auf die Figuren 1 und 2, umfasst einen Grundkörper 1. Der zylindrische Grundkörper 1 weist ein Wellenschlauch-Verbindungsende 2 und ein als Verbindungselement 3 ausgebildetes, gegenüberliegendes Ende auf. Das Verbindungselement 3 ist mit einem Gewinde 4 versehen, mit dem das Verbindungs- und Anschlussstück in ein passendes Innengewinde, beispielsweise einer Rohrleitung, eingeschraubt werden kann. Als Schraubhilfe ist ein umlaufender Flansch 5 vorgesehen, der als Schlüsselweite (Schlüsseleingriffsteil), als Loch- oder als Nutkranz ausgebildet werden kann.

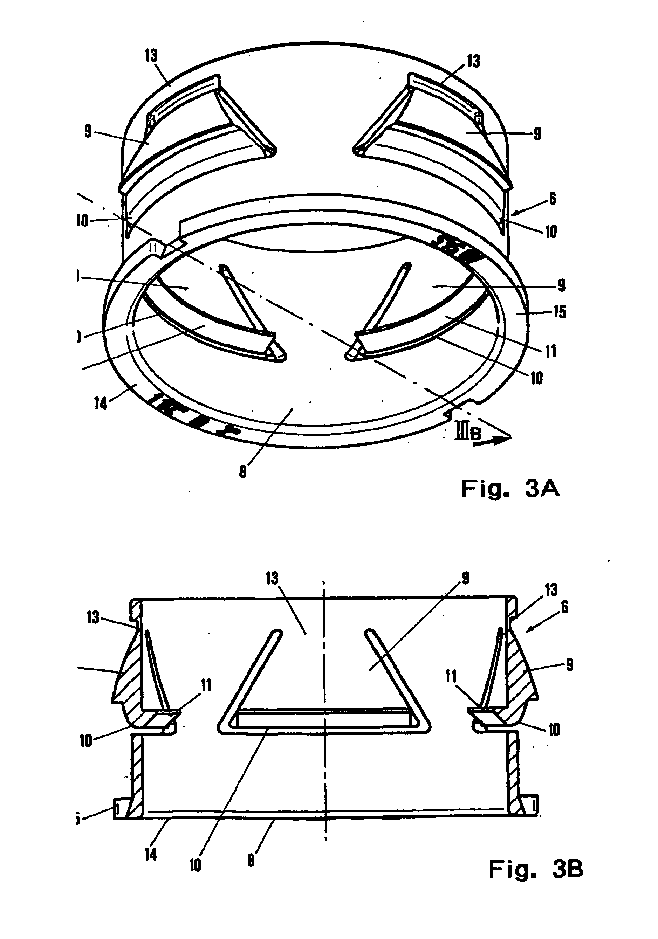

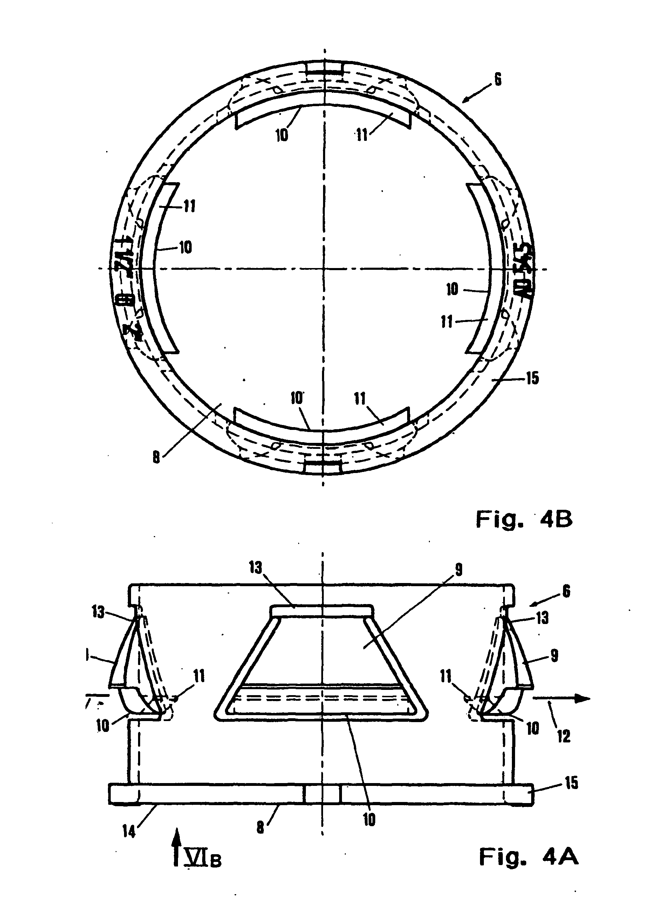

In das Wellenschlauch-Verbindungsende 2 ist eine Innenhülse 6 eingesetzt, deren Aufbau deutlicher anhand der Figuren 3 und 4 zu erkennen ist.

Um den Umfang des Grundkörpers 1 herum in dem Bereich, in dem die Innenhülse 6 eingesetzt ist, verteilt sind vier Durchbrüche 7 ausgeführt, die eine trapezförmige Kontur aufweisen. Die Orientierung dieser Durchbrüche 7 in dem Grundkörper 1 ist derart, dass der breitere Bereich der trapezförmigen Kontur, das bedeutet die Grundfläche dieses Trapezes, zu dem offenen Ende 8, von dem aus ein nicht in den Figuren dargestellter Wellenschlauch in das Verbindungs- und Anschlussslück eingesteckt wird, hinweist.

Die Innenhülse 6 weist gleichmäßig um deren Umfang herum verteilt vier federnde Arme 9 auf; die Arme 9 entsprechen in ihrer Lage den vier Durchbrüchen 7 in dem Grundkörper 1.

Die federnden Arme 9 sind ebenfalls, entsprechend den Durchbrüchen 7, von einer trapezförmigen Kontur, allerdings mit geringfügig kleineren Außenabmessungen als die Durchbrüche 7, so dass sich die federnden Arme 9 dann, wenn auf deren Innenseiten ein Druck ausgeübt wird, frei nach außen in die Durchbrüche 7 hinein bewegen können.

An den freien Enden 10 der federnden Arme 9 befinden sich in radialer Richtung verlaufende Eingriffsvorsprünge 11, die sich dann, wenn ein Wellenschlauch über das offene Ende 8 aus in das Wellenschlauch-Verbindungsende 2 eingesteckt wird, aufgrund der Wellenerhebungen des Wellenschlauchs radial nach außen, d. h. in Richtung der Pfeile 12 in Figur 4A, biegen.

Wie anhand der Figuren deutlich wird, ist die Breite Be durch die trapezartige Form der federnden Arme 9 wesentlich größer als das gegenüberliegende Basis-Ende 13. Als Dimensionierungsvorschrift gilt, dass die Breite Be des federnden Arms an seinem freien Ende 10 mindestens dem 1,5-fachen der Breite Bb des Basis-Endes 13 beträgt (siehe hierzu Figur 5A). In dem in den Figuren gezeigten Ausführungsbeispiel entspricht die Breite Be etwa dem 1,9-fachen der Breite Bb.

Die Länge der vier Eingriffsvorsprünge 11 ergibt etwa zwei Drittel des Innenumfangs der Innenhülse 6, wie dies anhand der Figur 4B zu erkennen ist, was wiederum bedeutet, dass der in die Innenhülse 6 eingesteckte Wellenschlauch über zwei Drittel seines Umfangs durch die Eingriffsvorsprünge 11 gehalten wird.

Die bevorzugte Länge Ln der federnden Arme 9, d. h. die Länge in axialer Richtung des Verbindungs- und Anschlussstücks von dem Basis-Ende 13 bis zu dem freien Ende 10 hin, ist so gewählt, dass sie größer als die Breite Bb des Basis-Endes 13 ist; hierdurch werden die federnden Eigenschaften verbessert. Andererseits sollte die Länge Ln nicht größer als die Breite Be des freien Endes 10 des federnden Arms 9 sein.

Der axiale Abstand Lh des freien Endes 10 des federnden Arms 9 von dem offenen Ende 8 der Innenhülse 6 bzw. des Grundkörpers 1 sollte mindestens dem 0,8-fachen der Breite Bb des Basis-Endes 13 entsprechen. Hierbei ist das Ende 8 der Innenhülse 6 durch die äußere Fläche 14 eines Flansches 15 definiert; dieser nach außen über den Außenumfang der Innenhülse 6 vorstehende Flansch 15 dient als Anlage der Innenhülse 6 an der stirnseitigen Fläche 16 des Grundkörpers 1, in den die Innenhülse 6 eingesteckt ist.

Weiterhin beträgt, wie die Figur 5B zeigt, der axiale Abstand Lh des freien Endes jedes federnden Arms von dem Wellenschlauch-Verbindungsende mindestens dem 2-fachen des Abstands Lf des Basis-Endes des federnden Arms von dem Verbindungselement-

| | Schlauch-Außen-durchmes-ser (mm) | Umfang Schlauch (mm) | Bb (mm) | Ln (mm) | Lh (mm) | Be (mm) | Lf (mm) | Eingriffs-bereich (mm) |
|---|---|---|---|---|---|---|---|---|
| Beispiel 1 | 54.5 | 171,3 | 12,5 | 15 | 13 | 28,6 | 5 | 110,16 (64 %) |
| Beispiel 2 | 42,5 | 133,45 | 12,0 | 14,5 | 11 | 21,9 | 5 | 87,72 (65,7%) |
| Beispiel 3 | 34,5 | 108,33 | 9,66 | 14,5 | 10 | 20,30 | 4 | 80,8 (74,5%) |

Ende.

Bevorzugte Dimensionierungen von Verbindungs- und Anschlussstücken, wie sie vorstehend beschrieben sind, als Beispiele für typische Schlauchdurchmesser von Wellenschläuchen mit 34,5 mm, 42,5 mm und 54,5 mm (Außendurchmesser), sind der nachfolgenden Tabelle zu entnehmen.

In der Tabelle bedeuten:
- Bb:: Breite des federnden Arms 9 an seinem Basis-Ende 13
- Ln:: Länge des federnden Arms 9 von dem Basis-Ende 13 bis zu dem freien Ende 10
- Be:: Breite des federnden Arms 9 an seinem freien Ende 10

- Lf:: Abstand des Basis-Endes 13 des federnden Arms 9 von dem Ende des Verbin- dungselements 2

Anhand der Tabelle ergibt sich, dass die Bedingung Be ≥ 1,5 x Bb erfüllt ist, da in Beispiel 1 Be, die Breite des freien Endes des federnden Arms 9 dem 2,288-fachen, in Beispiel 2 dem 1,825-flachen und in Beispiel 3 dem 2,10-fachen von Bb, dem Basis-Ende des federnden Arms 9, entspricht.

Auch ist in allen Beispielen die Länge Ln des jeweiligen federnden Arms 9 kleiner als die Breite Be. Auch sind die Vorschriften Ln x 1,2 ≥ 1,4 Bb und Be : Ln ≥ 1,4 erfüllt, das bedeutet, dass die Länge Ln des federnden Arms 9 von dem Basis-Ende 13 bis zu dem freien Ende 10 um das 1,2-fache größer ist als die Breite Bb seines Basis-Endes 13 und um das 1,4-fache kleiner als die Breite Be des freien Endes 10 ist.

In der letzten Spalte ist jeweils die Summe der Längen des Eingriffsbereichs der vier Eingriffsvorsprünge 11 der vier federnden Arme 9 in Millimetern angegeben; die Angaben in Klammern geben den prozentualen Eingriffsanteil der Eingriffsvorsprünge 11 des Verbindungs- und Anschlussstücks in Bezug auf den entsprechenden Schlauchdurchmesser, wie er sich aus der ersten Spalte ergibt, an. Die vier Eingriffsvorsprünge 11 erstrecken sich somit über mindestens 60 % des Innenumfangs des Grundkörpers 1.

Weiterhin ist bei diesen Beispielen 1 bis 3 die Bedingung Lh ≥ 0,8 x Bb erfüllt, wobei Lh den axialen Abstand des freien Endes 10 des federnden Arms 9 von dem Wellenschlauch-Verbindungsende 2 angibt.

Während in den Figuren 5A und 5B eine Anordnung gezeigt ist, bei der die federnden Arme an einer Innenhülse angeordnet sind, zeigen die Figuren 6A und 6B Detailansichten eines federnden Arms, der eine Außenhülse zugeordnet ist, wobei diese Außenhülse mit dem Bezugszeichen 17 bezeichnet ist. Prinzipiell ist die Wirkungsweise der Anordnung der Figuren 6A und 6B mit derjenigen der Figuren 5A und 5B vergleichbar, so dass die entsprechenden Angaben zu den Figuren 5 auf die Figuren 6 übertragen werden können, was insbesondere auch für die Dimensionierungen gilt; eine sich wiederholende Beschreibung dieser Merkmale ist daher weggelassen.

## Patentansprüche

1. Verbindungs- und Anschlussstück für einen Wellenschlauch mit einem hülsenförmigen Grundkörper (1) der ein Wellenschlauch-Verbindungsende (2) aufweist, und einer dazu zugeordneten Innen- oder Außenhülse, (6,17) wobei das Ende eines Wellenschlauchs in die Innenhülse (6), die in den Grundkörper (1) eingesetzt ist, oder, in Verbindung mit einer Außenhülse (17), in den Grundkörper (1) einsteckbar ist, und dessen anderes Ende (3) als Verbindungselement ausgebildet ist, und wobei mindestens zwei federnde Arme (9) an der Hülse (6, 17) vorgesehen sind, die jeweils an ihrem Basis-Ende (13) an der Hülse (6, 17) fest gehalten sind und an ihrem anderen freien Ende (10) mindestens einen radial verlaufenden Eingriffsvorsprung (11) aufweisen, der über den Innenumfang der Hülse (6, 17) nach innen vorsteht und mit den Wellen eines Wellenschlauchs, diesen arretierend, in Eingriff bringbar ist, wobei das Basis-Ende (13) in Bezug auf das freie Ende von dem Wellenschlauch-Verbindungsende (2) abgewandt ist, **dadurch gekennzeichnet,**
**dass** mindestens zwei federnde Arme (9) vorgesehen sind und so dimensioniert sind,
**dass** sich deren Eingriffsvorsprünge (11) über mindestens 50 % des Innenumfangs des Grundkörpers (1) erstrecken,
**dass** der jeweilige federnde Arm (9), in Umfangsrichtung des Grundkörpers (1) gesehen, eine Breite (Be) seines freien Endes (10) aufweist, die mindestens dem 1,5-fachen der Breite (Bb) seines Basis-Endes (13) entspricht,
**dass** der jeweilige federnde Arm (9) eine Länge (Ln) von dem Basis-Ende (13) bis zu dem freien Ende (10) aufweist, die größer als die Breite (Bb) seines Basis-Endes (13) ist.

2. Verbindungs- und Anschlussstück nach Anspruch 1, **dadurch gekennzeichnet, dass** die Länge (Ln) des jeweiligen federnden Arms (9) kleiner als die Breite (Be) seines freien Endes (10) ist.

3. Verbindungs- und Anschlussstück nach Anspruch 1, **dadurch gekennzeichnet, dass** der axiale Abstand (Lh) des freien Endes (10) jedes federnden Arms (9) von dem Wellenschlauch-Verbindungsende (2) mindestens das 0,8-fache der Breite (Bb) des Basis-Endes (13) des federnden Arms (9) beträgt.

4. Verbindungs- und Anschlussstück nach einem der Ansprüche 1 bis 3, **dadurch gekennzeichnet, dass** mindestens drei federnde Arme (9) vorgesehen sind.

5. Verbindungs- und Anschlussstück nach Anspruch 4, **dadurch gekennzeichnet, dass** vier federnde Arme (9) vorgesehen sind.

6. Verbindungs- und Anschlussstück nach Anspruch 5, **dadurch gekennzeichnet, dass** sich die Eingriffsvorsprünge (11) der federnden Arme (9) über mindestens 60 % des Innenumfangs des Grundkörpers (1) erstrecken.

7. Verbindungs- und Anschlussstück nach Anspruch 1, **dadurch gekennzeichnet, dass** die Breite (Be) des freien Endes (10) des federnden Arms (9) mindestens das 1,5-fache der Breite (Bb) seines Basis-Endes (13) beträgt.

8. Verbindungs- und Anschlussstück nach Anspruch 1, **dadurch gekennzeichnet, dass** die Länge (Ln) des federnden Arms (9) von dem Basis-Ende (13) bis zu dem freien Ende (10) um das mindestens 1,2-fache größer ist als die Breite (Bb) seines Basis-Endes (13) und dass das Verhältnis von der Breite seines Freien Endes (Be) seiner zu Länge (Ln) mindestens 1,4 beträgt.

9. Verbindungs- und Anschlussstück nach einem der Ansprüche 1 bis 8, **dadurch gekennzeichnet, dass** der axiale Abstand (Lh) des freien Endes (10) jedes federnden Arms (9) von dem Wellenschlauch-Verbindungsende (2) mindestens dem 2-fachen des Abstands (Lf) des Basis-Endes (13) des federnden Arms (9) von dem Verbindungselement-Ende (3) beträgt.

## Claims

1. A connection and attachment component for a corrugated hose, having a sleeve-like base body (1) that exhibits a corrugated hose connection end (2), and having an associated inner and outer sleeve (6, 17), whereby the end of a corrugated hose can be pushed into the inner sleeve (6), which is inserted into the base body (1), or is inserted into the base body (1) in conjunction with an outer sleeve (17), and the other end (3) of it is designed in the form of a connection element, and whereby at least two resilient arms (9) are provided at the sleeve (6, 17), with each said arm being secured at its base end (13) to the sleeve (6, 17) and at its other, free end (10) exhibiting at least one radially progressing engagement protrusion, which protrudes inward beyond the inner circumference of the sleeve and can be brought into engagement with the corrugations of the corrugated hose such that it arrests said hose, whereby the base end relative to the free end points away from the corrugated hose connection end (2), **characterized in**
**that** at least two resilient arms (9) are provided and are dimensioned such
**that** their engagement protrusions (11) extend at least across 50% of the inner circumference of the base body (1),
**that** the respective resilient arm (9), viewed in the circumferential direction of the base body (1) exhibits a width (Be) of its free end (10), which corresponds to at least 1.5 times the width (Bb) of its base end (13),
**that** the respective resilient arm (9) exhibits a length (Ln) from the base end (13) to the free end (10), which is greater than the width (Bb) of its base end (13).

2. A connection and attachment component as set forth in claim 1, **characterized in that** the length (Ln) of the respective recilient arm (9) is smaller than the width (Be) of the free end (10) thereof.

3. A connection and attachment component as set forth in claim 1, **characterized in that** the axial distance (Lh) of the free end (10) of each resilient arm (9) from the corrugated hose connection end (2) is at least 0.8 times the width (Bb) of the base end (13) of the resilient arm (9).

4. A connection and attachment component as set forth in one of the claims 1 to 3, **characterized in that** at least three resilient arms (9) are provided.

5. A connection and attachment component as set forth in claim 4, **characterized in that** four resilient arms (9) are provided.

6. A connection and attachment component as set forth in claim 5, **characterized in that** the engagement protrusions (11) of the resilient arms (9) extend across at least 60% of the inner circumference of the base body (1).

7. A connection and attachment component as set forth in claim 1, **characterized in that** the width Be of the free end (10) of the resilient arm (9) is at least 1.5 times the width Bb of its base end (13).

8. A connection and attachment component as set forth in claim 1, **characterized in that** the length (Ln) of the resilient arm (9) from the base end (13) to the free end (10) is at least 1.2 times greater than the width (Bb) of its base end (13) and **in that** the ratio of the width of the free end thereof (Be) to the length thereof (Ln) is at least 1.4.

9. A connection and attachment component as set forth in one of the claims 1 to 8, **characterized in that** the axial distance (Lh) of the free end (10) of each resilient arm (9) from the corrugated hose connection end (2) is at least 2 times the distance (Lf) of the base end (13) of the resilient arm (9) from the connection element end (3).

## Revendications

1. Pièce de raccordement et de connexion pour un tuyau flexible ondulé avec un corps de base en forme de gaine (1) qui présente une extrémité (2) de connexion de tuyau flexible ondulé et une gaine externe ou interne (6, 17) associée, l'extrémité du tuyau flexible ondulé étant insérable dans la gaine interne (6), qui est introduite dans le corps de base (1) ou est en connexion avec une gaine externe (17), dans le corps de base (1) et dont l'autre extrémité (3) est réalisée comme un élément de connexion, et au moins deux bras élastiques (9) étant prévus sur la gaine (6, 17) qui sont respectivement maintenus par leur extrémité de base (13) à la gaine (6, 17) et présentent à leur autre extrémité libre (10) au moins une saillie d'engagement (11) qui s'étend radialement, qui fait saillie vers l'intérieur au-dessus de la périphérie interne de la gaine (6, 17) et qui peut être amenée en prise avec les ondulations d'un tuyau flexible ondulé, en le bloquant, l'extrémité de base (13) étant opposée à l'extrémité de connexion de tuyau flexible ondulé (2) par rapport à l'extrémité libre,
**caractérisée en ce qu'**au moins deux bras élastiques (9) sont prévus et sont dimensionnés de sorte que leurs saillies d'enclenchement (11) s'étendent sur au moins 50 % de la périphérie interne du corps de base (1),
**en ce que** le bras respectif élastique (9), vu dans le sens périphérique du corps de base (1), présente une largeur (Be) de son extrémité libre (10), qui correspond au moins à 1,5 fois la largeur (Bb) de son extrémité de base (13),
**en ce que** le bras respectif élastique (9) présente une longueur (Ln) de son extrémité de base (13) jusqu'à l'extrémité libre (10), qui est plus grande que la largeur (Bb) de son extrémité de base (13).

2. Pièce de raccordement et de connexion selon la revendication 1, **caractérisée en ce que** la longueur (Ln) du bras élastique respectif (9) est plus petite que la largeur (Be) de son extrémité libre (10).

3. Pièce de raccordement et de connexion selon la revendication 1, **caractérisée en ce que** la distance axiale (Lh) de l'extrémité libre (10) de chaque bras élastique (9) de l'extrémité de connexion de tuyau flexible ondulé (2) s'élève à au moins 0,8 fois de la largeur (Bb) de l'extrémité de base (13) du bras élastique (9).

4. Pièce de raccordement et de connexion selon l'une des revendications 1 à 3, **caractérisée en ce qu'**il est prévu au moins trois bras élastiques (9).

5. Pièce de raccordement et de connexion selon la revendication 4, **caractérisée en ce qu'**il est prévu au moins quatre bras élastiques (9).

6. Pièce de raccordement et de connexion selon la revendication 5, **caractérisée en ce que** les saillies d'enclenchement (11) des bras élastiques (9) s'étendent sur au moins 60 % de la périphérie interne du corps de base (1).

7. Pièce de raccordement et de connexion selon la revendication 1, **caractérisée en ce que** la largeur (Be) de l'extrémité libre (10) du bras élastique (9) s'élève au moins à 1,5 fois de la largeur (Bb) de son extrémité de base (13).

8. Pièce de raccordement et de connexion selon la revendication 1, **caractérisée en ce que** la longueur (Ln) du bas élastique (9) entre l'extrémité de base (13) et l'extrémité libre (10) est plus grande d'au moins 1,2 fois que la largeur (Bb) de son extrémité de base (13) et que le rapport entre la largeur (Be) de son extrémité libre et sa longueur (Ln) est au moins 1,4.

9. Pièce de raccordement et de connexion selon l'une des revendications 1 à 8, **caractérisée en ce que** la distance axiale (Lh) de l'extrémité libre (10) de chaque bras élastique (9) de l'extrémité de connexion de tuyau flexible (2) représente au mois 2 fois la distance (Lf) de l'extrémité de base (13) du bras élastique (9) de l'extrémité d'élément de connexion (3).
